# EUROPÄISCHE PATENTSCHRIFT

(11) **EP 3 207 537 B1**
(45) Veröffentlichungstag und Bekanntmachung des Hinweises auf die Patenterteilung: **27.06.2018**
(21) Anmeldenummer: 15788324.0
(22) Anmeldetag: 09.10.2015
(51) Int. Cl.: G08C 17/00, G08C 19/00

(54) **VERFAHREN ZUM AUFBAU UND BETRIEB EINES DRAHTLOSEN FAHRZEUG-NETZWERKS**
METHOD FOR SETTING UP AND OPERATING A WIRELESS VEHICLE NETWORK
PROCÉDÉ POUR ÉTABLIR ET FAIRE FONCTIONNER UN RÉSEAU DE VÉHICULE SANS-FIL

(30) Priorität: 17.10.2014 DE 102014015394
(43) Veröffentlichungstag der Anmeldung: 23.08.2017
(73) Patentinhaber: WABCO GmbH, 30453 Hannover (DE)
(72) Erfinder: DIECKMANN, Thomas, 30982 Pattensen (DE); HÜBNER, Sören, 26345 Bockhorn (DE); WOLF, Thomas, 30890 Barsinghausen (DE)
(74) Vertreter: Lauerwald, Jörg
(86) Internationale Anmeldenummer: PCT/EP2015/001997
(87) Internationale Veröffentlichungsnummer: WO 2016/058681

(56) Entgegenhaltungen:
- US-A1- 2002 030 590
- US-A1- 2008 303 648

## Beschreibung

Die Erfindung betrifft ein Verfahren zum Aufbau und Betrieb eines drahtlosen Fahrzeug-Netzwerks mit wenigstens zwei Stationen, welche auch über eine physische Leitung miteinander verbunden werden. Daneben betrifft die Erfindung ein drahtloses Fahrzeug-Netzwerk zur Durchführung des Verfahrens und ein Steuergerät.

Moderne Nutzfahrzeuge sind mit einem elektronischen Bremssystem ausgestattet, insbesondere in Verbindung mit einer pneumatischen Bremsanlage. Wichtiges Element des elektronischen Bremssystems ist ein Steuergerät, welches die Funktionen des Bremssystems steuert und hierzu über Sensoren und über eine Datenverbindung Signale empfängt und verarbeitet. Über die Datenverbindung können auch Daten anderer im Fahrzeug vorgesehener Steuergeräte (zum Beispiel eines Motorsteuergerätes) empfangen und verarbeitet werden.

Mit dem elektronischen Bremssystem können auch die Steuerung einer pneumatischen Federung oder die Steuerung weiterer Funktionen im Fahrzeug verknüpft sein, etwa die Hubeinrichtung für eine Ladeplattform usw.

Gerade bei stehendem Fahrzeug ist eine Bedienung von Funktionen durch Personen außerhalb des Fahrzeugs wünschenswert. Der Fahrer des Fahrzeugs soll sich nicht zur Ausführung der Funktionen im Fahrerhaus aufhalten müssen. Um dies zu ermöglichen, können externe Bedienungseinheiten vorgesehen sein, die außen am Fahrzeug fest angeordnet und über physische Leitungen mit dem elektronischen Bremssystem gekoppelt sind, oder die per Funk mit dem elektronischen Bremssystem verbunden sind. Wünschenswert ist auch das Auslesen von Daten über die externen Bedienungseinheiten.

Wünschenswert ist auch die Steuerung von miteinander verbundenen Fahrzeugeinheiten und/oder das Auslesen von Daten aus diesen Fahrzeugeinheiten über ein externes Gerät.

Aus der DE 10 2013 003853 A1 ist ein Steuersystem zur Steuerung des Rückwärtsrangierens eines Gespanns aus Zugwagen und Anhänger bekannt. Die Steuergeräte in Zugwagen und Anhänger sind funktional jeweils mit einer internen Funkeinheit gekoppelt. Die Funkeinheiten bilden jeweils ein lokales Funknetz (WLAN) und können mit einer externen Funkeinheit verbunden sein. Angesprochen ist auch ein Datenaustausch per WLAN zwischen dem elektronischen Bremssystem des Zugwagens und dem elektronischen Bremssystem des Anhängers, sofern keine Kabelverbindung besteht. Dokument US2002/0030590 A1 offenbart ein Verfahren zum Aufbau und Betrieb eines drahtlosen Fahrzeug-Netzwerks mit wenigstens zwei Stationen.

Um einen drahtlosen Datenaustausch zwischen Zugwagen und Anhänger sowie eine drahtlose Steuerung durch externe Geräte von Zugwagen und Anhänger zu ermöglichen, ist eine unkomplizierte, automatische Kopplung des lokalen Funknetzes im Zugwagen mit dem lokalen Funknetz im Anhänger sinnvoll. Ziel ist die Bildung eines gemeinsamen drahtlosen Fahrzeug-Netzwerks. Dabei muss sichergestellt sein, dass nur die Fahrzeuge miteinander ein gemeinsames Netzwerk bilden, die dazu autorisiert sind. Dies ist besonders schwierig auf Betriebshöfen mit vielen dicht beieinander stehenden Fahrzeugen. Es wird deshalb davon ausgegangen, dass die Verknüpfung zweier lokaler Funknetze autorisiert ist, wenn die zugehörigen Fahrzeuge auch physisch miteinander verbunden sind. Das ist der Fall, wenn ein Anhänger an einen Zugwagen angekoppelt ist und beispielsweise eine elektrische Verbindung, zumindest für ein Bremslichtsignal, und/oder pneumatische Verbindungen für Steuerdruck und Vorratsdruck vorhanden sind.

Aufgabe der vorliegenden Erfindung ist die Schaffung eines Verfahrens zum automatischen Verbindungsaufbau zwischen zwei lokalen Fahrzeug-Netzen bzw. zum Aufbau und Betrieb eines drahtlosen Fahrzeug-Netzwerks mit wenigstens zwei Stationen. Die Verbindung soll insbesondere nur dann möglich sein, wenn zwei Fahrzeuge/zwei Stationen auch physisch miteinander verbunden sind. In den automatisierten Verbindungsaufbau soll der Fahrer des Zugwagens nicht involviert sein.

Zur Lösung der Aufgabe weist das erfindungsgemäße Verfahren die Merkmale des Anspruchs 1 auf. Insbesondere ist vorgesehen, dass die wenigstens zwei Stationen beim Aufbau des drahtlosen Netzwerks sowohl drahtlos als auch über die physische Leitung miteinander kommunizieren. Der geplante Aufbau des drahtlosen Netzwerks wird durch die zusätzliche Kommunikation über die physische Verbindung überprüft und bestätigt. Mit dem Verfahren ist ein automatischer bzw. selbständiger Aufbau des drahtlosen Fahrzeug-Netzwerks ohne menschlichen Eingriff möglich.

Zusätzlich soll das Verfahren folgende Merkmale aufweisen:
a) eine erste Station sendet drahtlos Signale, die auf die erste Station hinweisen,
b) eine zweite Station sendet drahtlos Signale, die auf eine Bereitschaft zur drahtlosen Verbindung mit einer anderen Station hinweisen,
c) spätestens jetzt wird eine physische Leitung zwischen den beiden Stationen aufgebaut,
d) die erste Station sendet über die physische Leitung an die zweite Station Signale,
e) die zweite Station sendet als Antwort drahtlos oder über eine physische Leitung an die erste Station Signale, welche von den über die physische Leitung übersandten Signalen der ersten Station abhängen,
f) die erste Station prüft die Antwort der zweiten Station und erlaubt nach positiver Prüfung den Aufbau des drahtlosen Netzwerks mit der zweiten Station,
e) die zweite Station bildet mit der ersten Station das drahtlose Netzwerk.

Als Station im Sinne der Erfindung wird eine Einrichtung verstanden, welche Elemente zur drahtlosen Kommunikation enthält, also Funksender und Funkempfänger, sowie Elemente, in denen Signale und Informationen verarbeitet werden, die das Fahrzeug betreffen. Insbesondere handelt es sich bei einer Station um eine WLAN-Kommunikationseinheit, die mit einem Steuergerät eines elektronischen Bremssystems gekoppelt ist. WLAN-Kommunikationseinheit und Steuergerät können auch in einem Gerät integriert oder Teile eines umfassenderen Gerätes sein. Die Station kann auch eine gesamte Fahrzeugeinheit umfassen, etwa einen Zugwagen oder Anhänger.

Die von der ersten Station drahtlos gesendeten Signale, welche auf die erste Station hinweisen sollen, enthalten in der einfachsten Ausführung nur die Nachricht, dass eine Station zur Verbindung mit einer anderen Station bereit ist, insbesondere einen Netzwerkpartner sucht. Darüber hinaus können weitere Informationen in der Nachricht enthalten sein, etwa eine eindeutige Absenderkennung und Angaben zu den Eigenschaften der Station. Analog gilt dies für die drahtlos gesendeten Signale der zweiten Station. Zusätzlich kann für die zweite Station vorgesehen sein, dass in deren Signalen die Nachricht enthalten ist, dass eine drahtlose Verbindung mit einer genau benannten ersten Station gewünscht ist.

Die physische Leitung zwischen den beiden Stationen soll möglichst vorhanden sein, bevor die beiden Stationen ihre Signale senden. Der gemäß der Aufgabenstellung gewünschte automatische Aufbau des drahtlosen Fahrzeug-Netzwerks bezieht sich nicht auf die Realisierung der physischen Leitung. Diese wird in der Regel unter Mitwirkung von Bedienungspersonen vollendet.

Über die physische Leitung werden Signale gesandt, mit deren Hilfe die drahtlose Verbindung autorisiert und verifiziert wird. Hierzu sendet die erste Station über die physische Leitung vorzugsweise eine individuelle Nachricht, die von der zweiten Station angenommen wird. Die zweite Station formuliert eine Antwort, die vom Inhalt der Nachricht abhängt und sendet die Antwort vorzugsweise drahtlos an die erste Station zurück. Im einfachsten Fall ist die Antwort eine Kopie der Nachricht. Die Antwort kann auch über eine physische Leitung an die erste Station zurückgeschickt werden. Dabei kann es sich auch um eine weitere physische Leitung handeln, etwa eine Datenverbindung, beispielsweise einen CAN-Bus.

Die erste Station prüft die Antwort der zweiten Station und vergleicht die Antwort mit der auf der physischen Leitung übersandten individuellen Nachricht. Bei Übereinstimmung (positiver Prüfung) erlaubt die erste Station die Bildung eines drahtlosen Netzwerks mit der zweiten Station. Individuelle Nachricht und Antwort können sich auch unterscheiden. Die Antwort muss nur aus der Nachricht abgeleitet sein, so dass ein Vergleich möglich ist.

Vorteilhafterweise enthalten die von der ersten Station drahtlos gesendeten Signale auch Netzwerkparameter. Bei den Signalen kann es sich um die drahtlosen Signale oder um die über die physische Leitung gesendeten Signale handeln. Netzwerkparameter sind beispielsweise eine Stationskennung im Netzwerk, Angaben zur Verschlüsselung in einem verschlüsselten Netzwerk, usw. Alternativ oder zusätzlich können auch Angaben zu dem der Station zugeordneten Fahrzeug enthalten sein, etwa der Fahrzeugtyp "Zugwagen" oder "Anhänger".

Bei der von der ersten Station über die physische Leitung übersandten individuellen Nachricht handelt es sich vorzugsweise um eine nach dem Zufallsprinzip ausgewählt oder generierte Datenfolge. Die Nachricht sollte nicht vorhersehbar sein, so dass Dritte keine Möglichkeit haben anstelle der zweiten Station mit der ersten Station ein Netzwerk zu bilden.

Vorteilhafterweise sendet die zweite Station drahtlos Signale, die auf eine Bereitschaft zur drahtlosen Verbindung nur mit der ersten Station hinweisen. D. h., die drahtlosen Signale der zweiten Station beziehen sich auf eine einzige erste Station, beispielsweise unter Angabe einer individuellen Kennung der ersten Station. Dadurch wird vermieden, dass die zweite Station mit anderen Stationen einen Verbindungsaufbau beginnt. Sofern zuvor die zweite Station Signale von zwei (ersten) Stationen erhalten hat, wählt die zweite Station automatisch eine der beiden ersten Stationen aus, etwa nach dem Zufallsprinzip oder nach der Stärke des empfangenen Signals. Die nicht ausgewählte erste Station kann später zum Zuge kommen, wenn der Verbindungsaufbau mit der ausgewählten ersten Station nicht erfolgreich abgeschlossen wird.

Nach einem weiteren Merkmal der Erfindung ist vorgesehen, dass die erste Station einer Klasse von Stationen angehört, die stets auch auf der physischen Leitung Signale übersenden und darauf drahtlose Signale als Antwort erwarten. Analog dazu kann vorgesehen sein, dass die zweite Station einer Klasse von Stationen angehört, die stets auf der physischen Leitung Signale erwarten und darauf drahtlose Signale als Antwort senden. Es ist nicht erforderlich, dass alle Stationen über die physische Leitung Signale senden und empfangen können. Dies reduziert den Aufwand für Hardware und Software. Die Stationen, die auf der physischen Leitung Signale übersenden werden hier vorzugsweise als "erste Stationen" bezeichnet, während die auf der physischen Leitung empfangenden Stationen hier vorzugsweise als "zweite Stationen" bezeichnet werden.

Nach einem weiteren Gedanken der Erfindung ist vorgesehen, dass die zweite Station mit der ersten Station das drahtlose Netzwerk bildet unter Verwendung von Netzwerk-Parametern einer der beiden Stationen, insbesondere von Netzwerk-Parametern der ersten Station. Je nach Charakter des Netzwerks unterscheiden sich die Parameter der beiden Stationen. In einem lokalen Funknetz nach dem WLAN-Standard IEEE-802.11 hat ein Access-Point (der ein Netzwerk aufspannt) eigene Parameter, nämlich unter anderem eine Netzwerkkennung SSID und Angaben zur Verschlüsselung. Erfindungsgemäß ist vorgesehen, dass die beiden Stationen ein gemeinsames Netzwerk bilden und dabei die Netzwerk-Parameter nur einer der beiden Stationen verwenden, insbesondere die Netzwerk-Parameter der ersten Station. Die beiden Stationen können sich drahtlos oder über die physische Leitung über die Netzwerk-Parameter austauschen. Eine Station muss die Parameter der anderen Station übernehmen und mit diesen einen Reset ausführen.

Erfindungsgemäß können nach dem Aufbau des drahtlosen Netzwerks Daten zwischen den Stationen verschlüsselt übertragen werden. Ein hierfür erforderlicher Netzwerk-Schlüssel wird von einer der Stationen vorgegeben und über die physische Leitung oder drahtlos, etwa per Beacon, zur anderen Station übertragen. Insbesondere wird der Netzwerk-Schlüssel von der ersten Station vorgegeben.

Vorteilhafterweise ist die erste Station einem Zugwagen und die zweite Station einem Anhänger zugeordnet. Die drahtlosen Signale der ersten Station enthalten vorzugsweise sinngemäß die Angabe "Station eines Zugwagens". Die drahtlosen Signale der zweiten Station weisen auf die Zuordnung zum Anhänger hin. Die Informationen können beim Aufbau der drahtlosen Verbindung berücksichtigt werden. Dadurch wird vermieden, dass die Station eines Zugwagens mit einer Station eines anderen Zugwagens eine Verbindung aufbauen möchte.

Nach einem weiteren Gedanken der Erfindung kann es sich bei den physischen Leitungen um Druckluftleitungen und/oder elektrische Leitungen handeln. Als Druckluftleitung ist beispielsweise eine Leitung für den Steuerdruck einer pneumatischen Bremsanlage vorgesehen. Beim Ankoppeln eines Anhängers an einen Zugwagen werden entsprechende Leitungsenden der beiden Fahrzeuge miteinander verbunden. Der Steuerdruck in der Druckluftleitung ist abhängig von dem im Zugwagen vorgegebenen Steuerdruck. Dieser kann durch ein hierfür vorgesehenes Steuergerät beeinflusst bzw. moduliert werden. So können über die Druckluftleitung in kurzer Abfolge unterschiedlich hohe Druckpulse als Signale geschickt werden. Auf Seiten des Anhängers werden die Druckpulse von Sensoren detektiert, die an das Steuergerät des Anhänger-Bremssystems angeschlossen sind. Ohne weiteres möglich ist eine Auflösung der Druckpulse von 0,1 bar. Das heißt, sofern die Druckpulse sich um wenigstens 0,1 bar unterscheiden, ist dieser Unterschied vom Steuergerät des Anhängers erkennbar. In analoger Weise können über die elektrische Leitung unterschiedlich hohe Spannungspulse übermittelt werden. Als elektrische Leitung ist beispielsweise eine Bremslichtleitung vorgesehen. Ebenso kann als physische Leitung eine Datenleitung vorgesehen sein. Über diese können die Steuergeräte der beteiligten Fahrzeuge Nachrichten in einem standardisierten Format austauschen. Auch können mehrere, unterschiedliche physische Leitungen vorgesehen sein.

Bei dem drahtlosen Netzwerk handelt es sich vorzugsweise um ein WLAN gemäß der Norm IEEE-802.11. Hardware und Software für WLAN-Netze in Fahrzeugen ist vorhanden und muss nur modifiziert werden für die Zwecke der Erfindung.

WLAN-Stationen, die als Access-Points konfiguriert sind, versenden sogenannte Beacons oder Beacon-Frames in einem bestimmten, vorgegebenen Rhythmus. Nach der Norm vorgegeben aber abänderbar werden etwa 10 Beacons pro Sekunde gesendet. Jeder Beacon enthält zum Teil fest vorgegebene und zum Teil abänderbare Informationen. Dazu zählen ein Zeitstempel, das Sendeintervall, die SSID, Angaben zur Verschlüsselung und weitere Informationen. Wenigstens ein Feld im Beacon ist unbelegt und kann mit frei wählbaren Informationen gefüllt werden. Es handelt sich um das letzte Feld, welches sogenannte herstellerspezifische Elemente enthalten kann. In dieses Feld können Elemente eingefügt werden, die im Zusammenhang mit dem Aufbau des drahtlosen Netzwerks von Bedeutung sind.

Vorteilhafterweise enthalten die Beacons der ersten Station wenigstens eine der nachfolgenden Informationen zusätzlich zu den für das WLAN üblichen Informationen:
- die erste Station sucht einen Netzwerkpartner,
- Typ einer der Station zugeordneten Vorrichtung (z. B. Zugwagen oder Anhänger),
- eine eindeutige Stationskennung, die nicht mit der SSID übereinstimmen muss.

Die eindeutige Stationskennung sollte so ausgewählt sein, dass sie weltweit nur einmalig vergeben ist oder zumindest ein Zusammentreffen im Verwendungsbereich der Station mit einer zweiten gleichlautenden Stationskennung nicht zu erwarten ist.

Auch die zweite Station ist als Access-Point konfiguriert. Die Beacons der zweiten Station enthalten vorteilhafterweise wenigstens eine der nachfolgenden Informationen zusätzlich zu den für das WLAN üblichen Informationen:
- Signale, die auf eine Bereitschaft zur drahtlosen Verbindung mit einer anderen Station hinweisen (Suche nach einem Netzwerkpartner),
- Typ einer der Station zugeordneten Vorrichtung (z. B. Anhänger),
- eine eindeutige Stationskennung, die nicht mit der SSID übereinstimmen muss,
- Signale, die von den auf der physischen Leitung von der ersten Station übersandten Signalen abhängen.

Die erste Station schickt über die physische Leitung Signale zur zweiten Station. Die zweite Station antwortet mit drahtlos übermittelten Signalen. Diese können im letzten Feld des Beacons eingefügt sein. Gerade diese Antwort der zweiten Station kann beschränkt sein auf ein Beacon oder eine begrenzte Anzahl Beacons oder auf Beacons innerhalb eines begrenzten Zeitintervalls.

In den Beacons der zweiten Station kann auch Bezug genommen werden auf die eindeutige Stationskennung der ersten Station, damit letztere erkennt, dass sich die Beacons der zweiten Station an genau diese erste Station richten.

Nach einem weiteren Gedanken der Erfindung ist vorgesehen, dass die beiden Stationen nach dem Aufbau per WDS (Wireless Distribution System) miteinander kommunizieren. Bei WDS handelt es sich um ein Verfahren zur Adressierung in einem WLAN. Per WDS können mehrere Access-Points im selben Netzwerk miteinander korrespondieren. Dabei werden die Netzwerk-Parameter eines der Access-Points verwendet. Beispielsweise können zwei WLAN- Router per WDS miteinander verbunden sein. In das derart gebildete Netzwerk können sich WLAN-Clients einbuchen und auf an allen Access-Points zur Verfügung stehende Daten zugreifen.

Gegenstand der Erfindung ist auch ein drahtloses Fahrzeug-Netzwerk mit den Merkmalen des Anspruchs 16. Das Netzwerk ist zur Durchführung des erfindungsgemäßen Verfahrens vorgesehen und weist wenigstens zwei (drahtlos miteinander kommunizierende) Stationen auf, welche auch über eine physische Leitung miteinander verbunden sind. Zusätzlich sind Mittel zum Senden und Empfangen von Signalen/Nachrichten über die physische Leitung vorgesehen, wobei wenigstens eine erste Station Mittel zum Senden von Signalen über die physische Leitung und wenigstens eine zweite Station Mittel zum Empfangen der über die physische Leitung gesendeten Signale aufweist. Die Mittel zum Senden der Signale sind in Abhängigkeit von drahtlos zwischen den Stationen übermittelten Signalen ansteuerbar. Vorausgesetzt werden demnach zwei Stationen, die drahtlos senden und empfangen können (und entsprechende Mittel hierfür aufweisen) und von denen die erste Station auch Signale über die physische Leitung senden kann und die zweite Station auch Signale über die physische Leitung empfangen kann.

Das Senden der Signale über die physische Leitung erfolgt in Abhängigkeit von den zuvor ausgetauschten drahtlosen Signalen. Hardware und Software der beiden Stationen ist an diese Funktionalität angepasst. Der Ablauf erfolgt automatisch und ohne Eingriff einer Bedienungsperson, also programmgesteuert.

Nach einem weiteren Gedanken der Erfindung umfassen die Mittel zum Senden der Signale über die physische Leitung einen Druckgeber, insbesondere Druckmodulator. Bei der physischen Leitung handelt es sich dann vorzugsweise um eine pneumatische Leitung, insbesondere eine Steuerdruckleitung einer pneumatischen Bremsanlage. Mit dem Druckgeber können pneumatische Signale/Druckpulse generiert und über die physische Leitung geschickt werden.

Nach einem weiteren Gedanken der Erfindung können die Mittel zum Senden der Signale über die physische Leitung einen Spannungsgeber, insbesondere Spannungsmodulator umfassen. Entsprechend handelt es sich bei der physischen Leitung um eine elektrische Leitung, insbesondere eine Bremslichtleitung. Auf der elektrischen Leitung werden für einen kurzen Zeitraum verschieden hohe Spannungen als Signale übermittelt. Möglich ist auch eine Taktung mit unterschiedlichen zeitlichen Abständen zwischen gleichen oder verschiedenen Spannungspegeln.

Gegenstand der Erfindung ist auch ein Steuergerät zur Durchführung des Verfahrens nach einem der Ansprüche 1 bis 15. Vorzugsweise ist eine WLAN-Einheit integriert. Insbesondere handelt es sich um ein Bremsen-Steuergerät.

Weitere Merkmale der Erfindung ergeben sich aus der Beschreibung im Übrigen und aus Ansprüchen. Vorteilhafte Ausführungsbeispiele der Erfindung werden nachfolgend anhand von Zeichnungen näher erläutert. Es zeigen:
Fig. 1 eine verkürzte Darstellung eines Ablaufplans für ein Verfahren zum Aufbau eines drahtlosen Fahrzeug-Netzwerks,
Fig. 2 ein Detail des Ablaufplans gemäß Fig. 1, nämlich einen ersten von drei Teilen,
Fig. 3 ein weiteres Detail des Ablaufplans gemäß Fig. 1, nämlich einen zweiten Teil,
Fig. 4 ein weiteres Detail des Ablaufplans gemäß Fig. 1, nämlich den dritten Teil von drei Teilen,
Fig. 5 eine schematische Darstellung eines drahtlosen Fahrzeug-Netzwerks mit einer ersten Station in einem Zugwagen und einer zweiten Station in einem Anhänger.

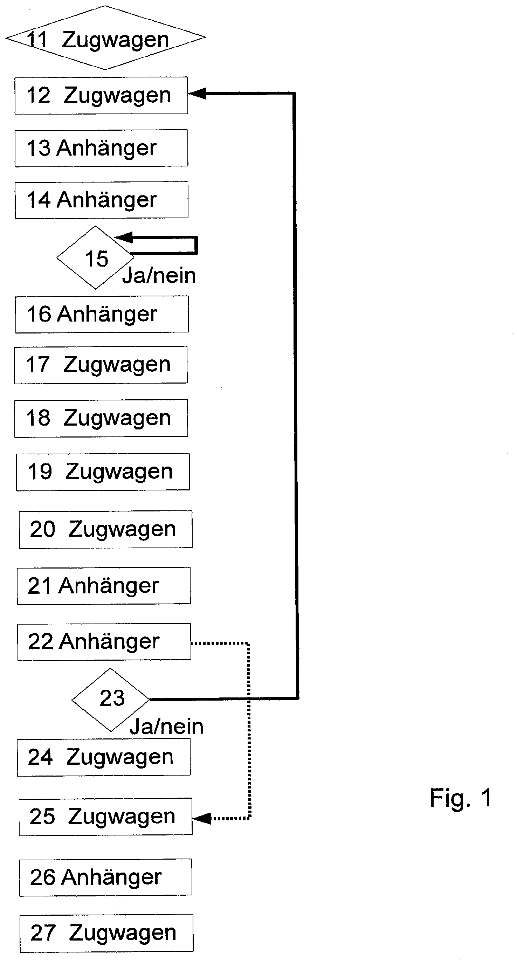

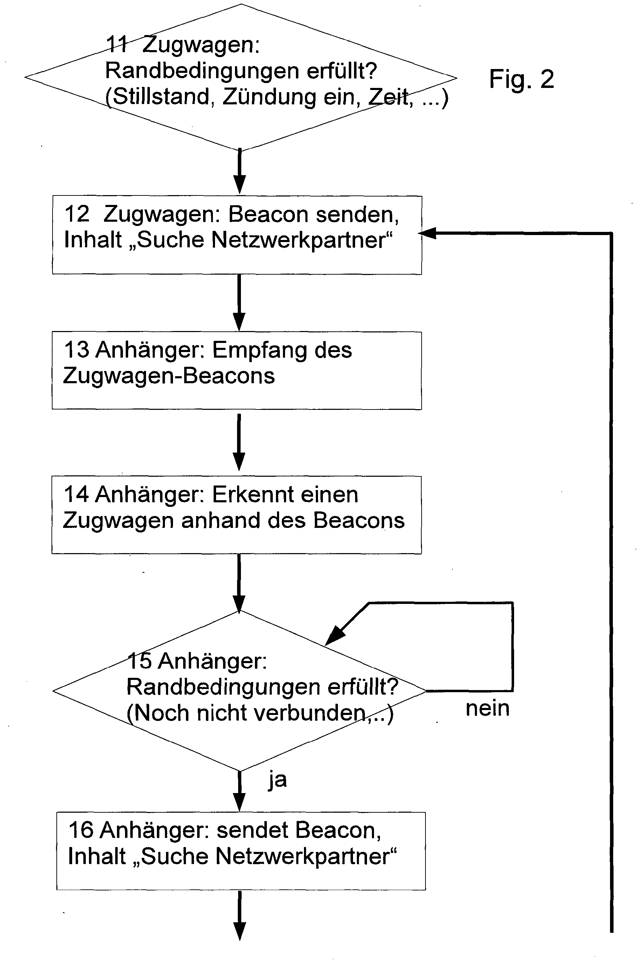

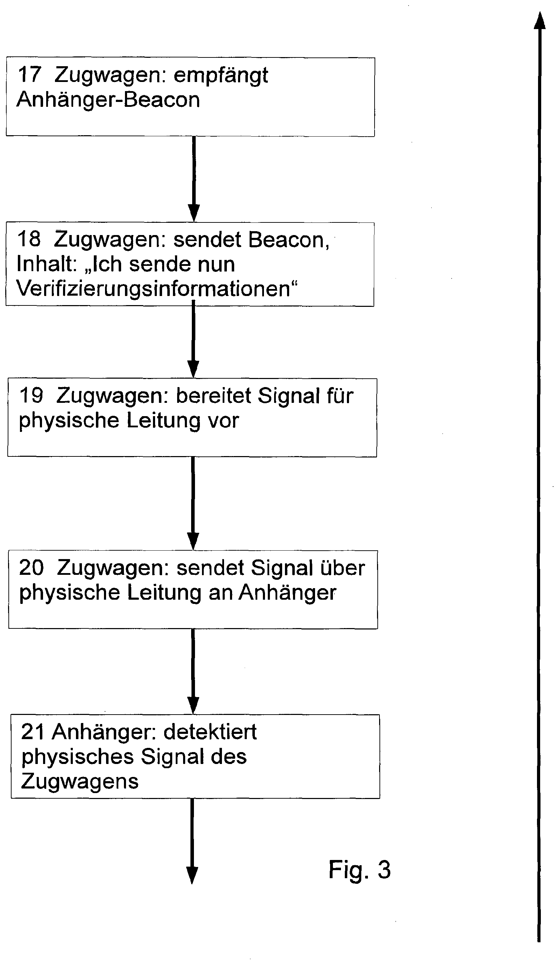

Die Fig. 1 bis 4 zeigen den Ablauf eines Verfahrens zum Aufbau eines drahtlosen Fahrzeug-Netzwerks anhand eines Ablaufplans mit Schritten 11 bis 27. Fig. 1 stellt eine verkürzte Übersicht dar, während die Fig. 2 bis 4 die Schritte 11 bis 16, 17 bis 21 und 22 bis 27 im Detail zeigen.

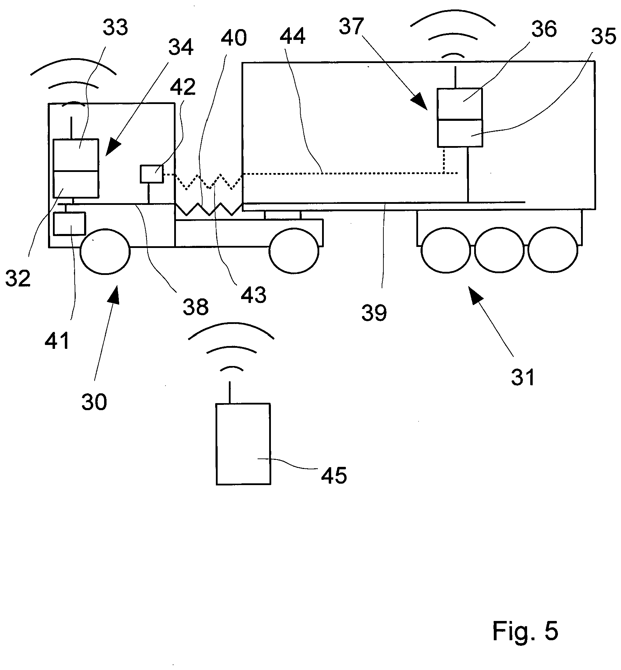

Im vorliegenden Ausführungsbeispiel der Fig. 5 erstreckt sich ein drahtloses Fahrzeug-Netzwerk über ein Fahrzeuggespann aus Zugwagen (Motorwagen) 30 und Anhänger (Auflieger) 31. Im Zugwagen 30 sind ein elektronisches Steuergerät 32 und eine WLAN-Einheit 33 zu einer ersten Station 34 des Netzwerks zusammengefasst. Analog dazu stellen im Anhänger 31 ein elektronisches Steuergerät 35 und eine WLAN-Einheit 36 Bestandteile einer zweiten Station 37 dar.

Die beiden Steuergeräte 32, 35 sind hier sogenannte Bremsensteuergeräte von elektronischen Bremssystemen im Zugwagen 30 und im Anhänger 31. Letztere sind außerdem jeweils mit einer pneumatischen Bremsanlage ausgestattet.

Die beiden Steuergeräte 32, 35 sind jeweils an einen fahrzeugeigenen Datenbus angeschlossen. Im vorliegenden Ausführungsbeispiel handelt es sich um CAN-Busse 38, 39, welche über eine genormte Motorwagen-Anhänger-Schnittstelle 40 miteinander verbunden sind. Gemäß Fig. 5 ist an den CAN-Bus 38 noch ein Motorsteuergerät 41 angeschlossen. An die CAN-Busse 38, 39 können außerdem weitere Geräte und/oder Sensoren angeschlossen sein.

Vom Steuergerät 32 wird ein Bremsbefehl, in Abhängigkeit von der Betätigung eines Bremspedals sowie nach Maßgabe von Algorithmen in der Software des Steuergeräts 32, über den CAN-Bus 38 an ein Anhängersteuerventil 42 übertragen. Letzteres speist einen pneumatischen Steuerdruck in eine Steuerleitungs-Schnittstelle 43 ein, an welche eine Anhänger-Steuerleitung 44 im Anhänger 31 angeschlossen ist. Der Steuerdruck wird unter anderem vom Steuergerät 35 abgetastet. Zugleich liegt der Steuerdruck an einem nicht gezeigten AnhängerBremsventil im Anhänger 31.

Die beiden Stationen 34, 37 sind derart ausgestattet, dass ein automatischer Aufbau eines Fahrzeug-Netzwerks ohne Eingriff einer Bedienungsperson möglich ist. Voraussetzung ist hier lediglich die Ankopplung des Anhängers 31 an den Zugwagen 30 mit Vollendung der elektrischen Verbindung (Schnittstelle 40) und der pneumatischen Verbindung (Steuerleitungs-Schnittstelle 43) sowie einer nicht gezeigten pneumatischen Druckleitung zwischen Zugwagen 30 und Anhänger 31. Davon ausgehend ergeben sich die Schritte 11 bis 27 beim Aufbau des Fahrzeug-Netzwerks:
Im vorliegenden Ausführungsbeispiel wird davon ausgegangen, dass der Zugwagen 30 die Führungsrolle beim Aufbau des Fahrzeug-Netzwerks inne hat. Dies beinhaltet die spätere Anpassung von Netzwerk-Parametern der zweiten Station 37 im Anhänger 31 an die Netzwerk-Parameter der ersten Station 34 im Zugwagen 30 sowie die Verifizierung und Autorisierung des Verbindungsaufbaus durch den Zugwagen 30 bzw. die erste Station 34. Zur Vereinfachung wird davon ausgegangen, dass die erste Station 34 stets im Zugwagen 30 vorgesehen ist, während die zweite Station 37 dem Anhänger 31 zugeordnet ist. Wenn nachfolgend nur der Zugwagen 11 und der Anhänger 13 genannt werden, sind damit auch die erste Station 34 im Zugwagen 30 und die zweite Station 37 im Anhänger 31 gemeint.

Der Aufbau des drahtlosen Fahrzeug-Netzwerks beginnt mit der Überprüfung der Randbedingungen im Zugwagen 30. Dabei kann es sich unter anderem um folgende Bedingungen handeln:
Zugwagen im Stillstand,
Zündung ein,
Uhrzeit innerhalb vorgegebener Grenzen,
usw.

Sofern die Randbedingungen erfüllt sind, sendet der Zugwagen per Funk Beacons mit den in einem WLAN üblichen Angaben (SSID, Verschlüsselungsart, usw.) und mit den zusätzlichen (frei wählbaren) Angaben
"Fahrzeugtyp: Motorwagen,
"Status: auf der Suche" und
"ID = xyz",
wobei "xyz" eine einmalige Nummer zur eindeutigen Kennzeichnung und Identifizierung der Station sein sollte.

Gemäß Schritt 13 empfängt der Anhänger 31 die ausgesendeten Beacons und erkennt gemäß Schritt 14 anhand der Angabe "Fahrzeugtyp: Motorwagen", dass es sich um Beacons eines potenziellen Netzwerkpartners handelt. Der Anhänger 31 ist hier bestrebt nur ein Fahrzeug-Netzwerk mit einem Zugwagen/Motorwagen einzugehen.

Gemäß Schritt 15 überprüft der Anhänger 31 nun, ob vorgegebene Randbedingungen erfüllt sind. Vorzugsweise handelt es sich um die Bedingungen:
Der im Beacon angegebene Status lautet "auf der Suche",
der Anhänger 31 befindet sich im Stillstand.

Sofern die Randbedingungen nicht erfüllt sind, findet nach Ablauf eines zuvor festgelegten Zeitintervalls eine erneute Überprüfung der Randbedingungen statt.

Sofern die Randbedingungen erfüllt sind, wird der Aufbau des Fahrzeug-Netzwerks gemäß Schritt 16 fortgesetzt. Der Anhänger hat bislang keine Beacons versendet oder nur Beacons ohne Bezug zu den Beacons des Zugwagens 30. Entsprechend sendet der Anhänger 31 nun Beacons einerseits mit den im WLAN üblichen Informationen und andererseits mit den individuellen Angaben
"Typ: Trailer",
"Status: Suche Partner für Fahrzeug-Netzwerk" und
"ID = vwx",
wobei "vwx" eine individuelle Nummer zur eindeutigen Identifizierung der zweiten Station 37 ist. Zusätzlich kann Bezug genommen werden auf den Zugwagen 30, etwa mit der Angabe "Wünsche Netzwerk mit ID = xyz". Der Anhänger 31 sendet seine Beacons einmal, mehrfach oder bis auf Weiteres.

Gemäß Schritt 17 empfängt der Zugwagen 30 den oder die vom Anhänger 31 gesendeten Beacons. Daraufhin sendet der Zugwagen 30 gemäß Schritt 18 einen oder mehrere Beacons mit dem zusätzlichen Inhalt
"Typ: Motorwagen",
"Status: Sende Verifizierungsinformation" und
"ID = xyz".

Anschließend bereitet der Zugwagen 30 die Übersendung eines Signals über die physische Leitung, nämlich hier über die Steuerleitungs-Schnittstelle 43 vor.

Gemäß Schritt 20 übersendet der Zugwagen 30 ein Signal über die physische Leitung an den Anhänger 31. Hierzu übersendet das Steuergerät 32 an das Anhänger-Steuerventil 43 entsprechende Befehle, etwa eine Abfolge von vier unterschiedlichen Druckpulsen, z. B. 1,9 bar, 2, 1 bar, 4,0 bar und 3,3 bar. Die Druckpulse folgen im Abstand von je zwei Sekunden und haben eine Länge von je einer Sekunde.

Gemäß Schritt 21 detektiert der Anhänger 31 das vom Zugwagen übersandte physische Signal. Anschließend sendet der Anhänger 31 das empfangene physische Signal, nämlich die empfangene Druckfolge/das Druckmuster per Beacon an den Zugwagen 30 zurück. Der oder die Beacons enthalten die zusätzliche Informationen
"Typ: Trailer",
"Status: Empfange Druckmuster 1,9 - 2,1 - 4,0 - 3,3" und
"ID = vwx".

Im Zugwagen 30 findet gemäß Schritt 23 eine Prüfung auf Übereinstimmung der über die physische Leitung gesendeten und drahtlos empfangenen Signale statt. Sofern keine Übereinstimmung vorliegt, besteht offenbar keine physische Leitung zwischen Zugwagen und Anhänger. Der Vorgang wird dann abgebrochen und der Zugwagen 30 kehrt zu Schritt 12 zurück.

Sofern Übereinstimmung festgestellt wird, akzeptiert der Zugwagen 30 den Anhänger 31 als Netzwerkpartner und sendet mit einem oder mehreren Beacons zusätzliche Informationen zur Verschlüsselung, etwa einen Netzwerkschlüssel. Dieser kann auch verschlüsselt dargestellt sein.

Gemäß Schritt 25 erlaubt der Zugwagen 30 nun den Verbindungsaufbau mit dem Anhänger 31.

Gemäß Schritt 26 passt der Anhänger 31 seine WLAN-Konfiguration an die des Zugfahrzeugs 30 an. D. h., der Anhänger 31 übernimmt die SSID und die Art der Verschlüsselung und gegebenenfalls weitere Parameter der Konfiguration des Zugwagens 30.

Nach Anpassung der Konfiguration des Anhängers 31 bildet dieser zusammen mit dem Zugwagen 30 gemäß Schritt 27 ein Fahrzeug-Netzwerk aus Access-Points, welche beispielsweise per WDS miteinander kommunizieren können.

Bis zur Bildung des gemeinsamen Fahrzeug-Netzwerks arbeiten beide Stationen 34, 37 als Access-Points mit eigener SSID und senden und empfangen Beacons mit entsprechenden Informationen, wie zuvor angegeben. Nach vollzogener Verifizierung der physischen Leitung zwischen Zugwagen 30 und Anhänger 31 führt die zweite Station 37 einen sogenannten Reset durch und startet neu mit der Konfiguration der ersten Station 34, um so das angestrebte gemeinsame Fahrzeug-Netzwerk zu bilden.

Fig. 5 zeigt außerdem noch einen WLAN-Client 45, welcher hier ein mobiles Gerät einer Bedienungsperson ist, beispielsweise ein Smartphone. Mit dem Smartphone kann sich die Bedienungsperson in das Fahrzeug-Netzwerk einwählen und auf beide Stationen 34, 37 zugreifen.

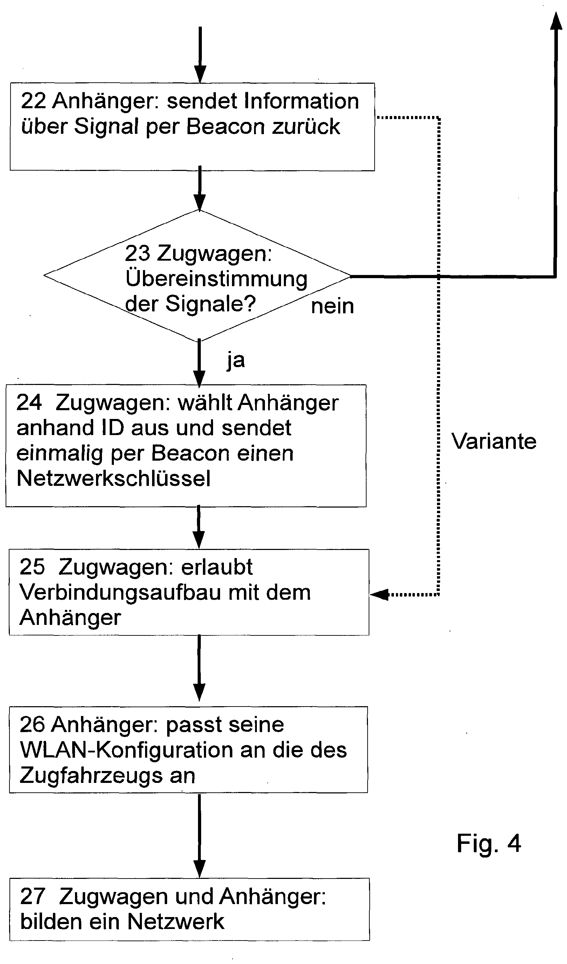

In einer Variante des zuvor beschriebenen Verfahrens zum Aufbau des Netzwerks ist vorgesehen, dass die Schritte 23 und 24 übersprungen werden, siehe gestrichelten Pfad rechts neben den Feldern für die Schritte 22 bis 25 in Figur 4. Sobald der Anhänger 31 die auf der physischen Leitung übersandte Information per Beacon zurückschickt, erlaubt der Zugwagen 30 den Verbindungsaufbau mit dem Anhänger 31. Der Schlüssel für das Netzwerk des Zugwagens 30 (das WLAN-Passwort/ein WPA 2-Schlüssel) ist dann beispielsweise in den über die physische Leitung übermittelten Informationen enthalten oder lässt sich daraus anhand einer im Anhänger 31 bekannten Tabelle oder eines Algorithmus berechnen. Der Anhänger 31 kann sich dann nach einem Reset direkt in das Netzwerk des Zugfahrzeugs 30 einwählen.

Hardware und Software der beiden Stationen 34, 37 sind zur Ausführung der genannten Funktionen ausgebildet. Die Mehrzahl der Schritte wird von den WLAN-Einheiten 33, 36 ausgeführt. Die Steuergeräte 32, 35 wirken als übergeordnete Instanzen und sind insbesondere im Zusammenhang mit der Übertragung der Signale auf der physischen Leitung und bei der Detektion derselben aktiv.

Anstelle der Kommunikation mittels WLAN-Beacons beim Aufbau des Netzwerks kann auch direkt per WLAN kommuniziert werden. Möglich ist auch die Verwendung anderer Funktechniken zum Aufbau und Betrieb eines Netzwerks. Beispielsweise kann bei ausreichend geringem Abstand der Stationen voneinander und/oder bei ausreichender Signalstärke auch ein Bluetooth-Netzwerk errichtet werden.

Parallel zur Schnittstelle 40 verläuft eine nicht gezeigte Bremslichtleitung als weitere physische Leitung, über die ebenfalls Signale übertragen werden können. Die Signale können vom Steuergerät 35 direkt oder über Sensoren detektiert und ausgewertet werden. Schließlich können auch über die Schnittstelle 40 Signale von Steuergerät zu Steuergerät übermittelt werden, zumindest sogenannte CAN-Nachrichten.

## Patentansprüche

1. Verfahren zum Aufbau und Betrieb eines drahtlosen Fahrzeug-Netzwerks mit wenigstens zwei Stationen (34, 37) welche auch über eine physische Leitung miteinander verbunden werden, wobei die Stationen beim Aufbau des drahtlosen Netzwerks sowohl drahtlos als auch über die physische Leitung miteinander kommunizieren, mit folgenden Merkmalen:
a) eine erste Station (34) sendet drahtlos Signale, die auf die erste Station hinweisen,
b) eine zweite Station (37) sendet drahtlos Signale, die auf eine Bereitschaft zur drahtlosen Verbindung mit einer anderen Station hinweisen,
c) spätestens jetzt wird eine physische Leitung zwischen den beiden Stationen aufgebaut,
d) die erste Station sendet über die physische Leitung an die zweite Station Signale,
e) die zweite Station sendet als Antwort drahtlos oder über eine physische Leitung an die erste Station Signale, welche von den über die physische Leitung übersandten Signalen der ersten Station abhängen,
f) die erste Station prüft die Anwort der zweiten Station und erlaubt nach positiver Prüfung den Aufbau des drahtlosen Netzwerks mit der zweiten Station,
e) die zweite Station bildet mit der ersten Station das drahtlose Netzwerk.

2. Verfahren nach Anspruch1, **dadurch gekennzeichnet, dass** von der ersten Station gesendete Signale auch Netzwerkparameter enthalten.

3. Verfahren nach Anspruch 1 oder 2 , **dadurch gekennzeichnet, dass** die von der ersten Station über die physische Leitung übersandten Signale eine individuelle Nachricht enthalten.

4. Verfahren nach Anspruch 1 oder einem der weiteren vorhergehenden Ansprüche, **dadurch gekennzeichnet, dass** die zweite Station drahtlos Signale sendet, die auf eine Bereitschaft zur drahtlosen Verbindung nur mit der ersten Station hinweisen.

5. Verfahren nach Anspruch 1 oder einem der weiteren vorhergehenden Ansprüche, **dadurch gekennzeichnet, dass** die erste Station einer Klasse von Stationen angehört, die stets auch auf der physischen Leitung Signale übersenden und darauf drahtlose Signale als Antwort erwarten.

6. Verfahren nach Anspruch 1 oder einem der weiteren vorhergehenden Ansprüche, **dadurch gekennzeichnet, dass** die zweite Station einer Klasse von Stationen angehört, die stets auf der physischen Leitung Signale erwarten und darauf drahtlose Signale als Antwort senden.

7. Verfahren nach Anspruch 1 oder einem der weiteren vorhergehenden Ansprüche, **dadurch gekennzeichnet, dass** die zweite Station mit der ersten Station das drahtlose Netzwerk bildet unter Verwendung von Netzwerk-Parametern einer der beiden Stationen, insbesondere von Netzwerk-Parametern der ersten Station.

8. Verfahren nach Anspruch 1 oder einem der weiteren vorhergehenden Ansprüche, **dadurch gekennzeichnet, dass** nach dem Aufbau des drahtlosen Netzwerks Daten zwischen Stationen verschlüsselt übertragen werden können, und dass ein hierfür erforderlicher Netzwerk-Schlüssel von einer der Stationen vorgegeben und über die physische Leitung oder drahtlos, insbesondere per Beacon, zur anderen Station übertragen wird.

9. Verfahren nach Anspruch 1 oder einem der weiteren vorhergehenden Ansprüche, **dadurch gekennzeichnet, dass** die erste Station einem Zugwagen und die zweite Station einem Anhänger zugeordnet ist.

10. Verfahren nach Anspruch 1 oder einem der weiteren vorhergehenden Ansprüche, **dadurch gekennzeichnet, dass** als physische Leitungen eine Druckluftleitung und/oder eine elektrische Leitung vorgesehen sind.

11. Verfahren nach Anspruch 1 oder einem der weiteren vorhergehenden Ansprüche, **dadurch gekennzeichnet, dass** das drahtlose Netzwerk ein Wireless Local Area Network, WLAN, ist, insbesondere gemäß der Norm IEEE-802.11.

12. Verfahren nach Anspruch 11, **dadurch gekennzeichnet, dass** die von der ersten Station und/oder von der zweiten Station zum Aufbau des Netzwerks gesendeten Signale in Beacons enthalten sind.

13. Verfahren nach Anspruch 12, **dadurch gekennzeichnet, dass** die Beacons der ersten Station wenigstens eine der nachfolgenden Informationen zusätzlich zu den für das WLAN üblichen Informationen enthalten:
- die erste Station sucht einen Netzwerkpartner,
- Typ einer der Station zugeordneten Vorrichtung,
- eine eindeutige Stationskennung, die nicht mit der Service Set Identifier, SSID, übereinstimmen muss.

14. Verfahren nach Anspruch 12 oder 13, **dadurch gekennzeichnet, dass** die Beacons der zweiten Station wenigstens eine der nachfolgenden Informationen zusätzlich zu den für das WLAN üblichen Informationen enthalten:
- Signale, die auf eine Bereitschaft zur drahtlosen Verbindung mit einer anderen Station hinweisen,
- Typ einer der Station zugeordneten Vorrichtung,
- eine eindeutige Stationskennung, die nicht mit der SSID übereinstimmen muss,
- Signale, die von den auf der physischen Leitung von der ersten Station übersandten Signalen abhängen.

15. Verfahren nach Anspruch 11 oder einem der weiteren vorhergehenden Ansprüche, **dadurch gekennzeichnet, dass** die beiden Stationen nach dem Aufbau des Netzwerks per Wireless Distribution System, WDS, miteinander kommunizieren.

16. Drahtloses Fahrzeug-Netzwerk zur Durchführung des Verfahrens nach einem der vorhergehenden Ansprüche, mit wenigstens zwei Stationen (34, 37), welche auch über eine physische Leitung miteinander verbunden sind, wobei wenigstens eine erste Station (34) auch Mittel zum Senden von Signalen über die physische Leitung und wenigstens eine zweite Station (37) auch Mittel zum Empfangen der über die physische Leitung gesendeten Signale aufweist, wobei die Mittel zum Senden der Signale in Abhängigkeit von zuvor drahtlos zwischen den Stationen übermittelten Signalen ansteuerbar sind.

17. Fahrzeug-Netzwerk nach Anspruch 16, **dadurch gekennzeichnet, dass** die Mittel zum Senden der Signale über die physische Leitung einen Druckgeber, insbesondere Druckmodulator umfassen, und dass die physische Leitung vorzugsweise eine pneumatische Leitung ist, insbesondere eine Steuerdruckleitung einer pneumatischen Bremsanlage.

18. Fahrzeug-Netzwerk nach Anspruch 16, **dadurch gekennzeichnet, dass** die Mittel zum Senden der Signale über die physische Leitung einen Spannungsgeber, insbesondere Spannungsmodulator umfassen, und dass die physische Leitung vorzugsweise eine elektrische Leitung ist, insbesondere eine Bremslichtleitung.

19. Steuergerät (32, 35) zur Durchführung des Verfahrens nach einem der Ansprüche 1 bis 15.

## Claims

1. Method for setting up and operating a wireless vehicle network with at least two stations (34, 37) which are also interconnected via a physical line, wherein the stations can communicate with one another both wirelessly and via the physical line during the wireless network set-up, having the following features:
a) a first station (34) wirelessly transmits signals which indicate the first station,
b) a second station (37) wirelessly transmits signals which indicate a readiness for the wireless connection to a different station,
c) a physical line is set up now at the latest between the two stations,
d) the first station transmits signals via the physical line to the second station,
e) in response, the second station transmits signals via a physical line to the first station, said signals being dependent on signals of the first station transmitted via the physical line,
f) the first station checks the response from the second station and, following a positive check, allows the set-up of the wireless network with the second station,
e) the second station forms the wireless network with the first station.

2. Method according to Claim 1, **characterized in that** signals transmitted by the first station also contain network parameters.

3. Method according to Claim 1 or 2, **characterized in that** the signals transmitted by the first station via the physical line contain an individual message.

4. Method according to Claim 1 or one of the further preceding claims, **characterized in that** the second station wirelessly transmits signals which indicate a readiness for the wireless connection to the first station only.

5. Method according to Claim 1 or one of the further preceding claims, **characterized in that** the first station belongs to a class of stations which always transmit signals on the physical line also and expect wireless signals in response thereto.

6. Method according to Claim 1 or one of the further preceding claims, **characterized in that** the second station belongs to a class of stations which always expect signals on the physical line also and transmit wireless signals in response thereto.

7. Method according to Claim 1 or one of the further preceding claims, **characterized in that** the second station forms the wireless network with the first station using network parameters of one of the two stations, in particular network parameters of the first station.

8. Method according to Claim 1 or one of the further preceding claims, **characterized in that**, following the set-up of the wireless network, data can be transmitted between stations in encrypted form, and that a network key required for this purpose is predefined by one of the stations and is transmitted via the physical line or wirelessly, in particular via a beacon, to the other station.

9. Method according to Claim 1 or one of the further preceding claims, **characterized in that** the first station is assigned to a traction unit and the second station is assigned to a trailer.

10. Method according to Claim 1 or one of the further preceding claims, **characterized in that** a compressed air line and/or an electrical line are provided as physical lines.

11. Method according to Claim 1 or one of the further preceding claims, **characterized in that** the wireless network is a Wireless Local Area Network, WLAN, in particular according to the IEEE-802.11 standard.

12. Method according to Claim 11, **characterized in that** the signals transmitted by the first station and/or by the second station to set up the network are contained in beacons.

13. Method according to Claim 12, **characterized in that** the beacons of the first station contain at least one of the following information elements in addition to the information normally provided for the WLAN:
- the first station searches for a network partner,
- type of a device assigned to the station,
- a unique station identifier, which does not have
to match the Service Set Identifier, SSID.

14. Method according to Claim 12 or 13, **characterized in that** the beacons of the second station advantageously contain at least one of the following information elements in addition to the information normally provided for the WLAN:
- signals indicating a readiness for the wireless connection to a different station,
- type of a device assigned to the station,
- a unique station identifier, which does not have to match the SSID,
- signals which depend on the signals transmitted by the first station on the physical line.

15. Method according to Claim 11 or one of the further preceding claims, **characterized in that** the two stations communicate with one another via Wireless Distribution System, WDS, following the network set-up.

16. Wireless vehicle network to carry out the method according to one of the preceding claims, with at least two stations (34, 37) which are also interconnected via a physical line, wherein at least one first station (34) also has means for transmitting signals via the physical line and at least one second station (37) also has means for receiving the signals transmitted via the physical line, wherein the means for transmitting the signals are controllable depending on signals previously transmitted wirelessly between the stations.

17. Vehicle network according to Claim 16, **characterized in that** the means for transmitting the signals via the physical line comprise a pressure transmitter, in particular a pressure modulator, and that the physical line is preferably a pneumatic line, in particular a control pressure line of a pneumatic braking system.

18. Vehicle network according to Claim 16, **characterized in that** the means for transmitting the signals via the physical line comprise a voltage transmitter, in particular a voltage modulator, and that the physical line is preferably an electrical line, in particular a brake light line.

19. Control unit (32, 35) to carry out the method according to one of Claims 1 to 15.

## Revendications

1. Procédé pour établir et exploiter un réseau sans fil pour véhicule comprenant au moins deux stations (34, 37) qui sont également interconnectées par l'intermédiaire d'une ligne physique, dans lequel les stations communiquent entre elles à la fois sans fil et par l'intermédiaire de la ligne physique lorsque le réseau sans fil est établi, présentant les caractéristiques suivantes :
a) une première station (34)
b) transmet des signaux sans fil indicatifs de la première station, une seconde station (37) transmet des signaux sans fil indicatifs d'une intention de se connecter sans fil à une autre station,
c) au plus tard immédiatement, une ligne physique est établie entre les deux stations,
d) la première station transmet des signaux à la seconde station par l'intermédiaire de la ligne physique,
e) en réponse à ceux-ci, la seconde station transmet des signaux à la première station, soit sans fil, soit par l'intermédiaire d'une ligne physique, en fonction des signaux transmis par la première station par l'intermédiaire de la ligne physique,
f) la première station vérifie la réponse de la seconde station et, après une vérification positive, permet l'établissement du réseau sans fil avec la seconde station,
e) la seconde station crée le réseau sans fil avec la première station.

2. Procédé selon la revendication 1, **caractérisé en ce que** les signaux transmis par la première station contiennent également des paramètres de réseau.

3. Procédé selon la revendication 1 ou 2, **caractérisé en ce que** les signaux transmis par la première station par l'intermédiaire de la ligne physique contiennent un message individuel.

4. Procédé selon la revendication 1 ou l'une quelconque des autres revendications précédentes, **caractérisé en ce que** la seconde station transmet des signaux sans fil indiquant une intention de ne se connecter sans fil qu'à la première station.

5. Procédé selon la revendication 1 ou l'une quelconque des autres revendications précédentes, **caractérisé en ce que** la première station appartient à une classe de stations qui transmettent également en permanence des signaux sur la ligne physique et attendent des signaux sans fil en réponse à ceux-ci.

6. Procédé selon la revendication 1 ou l'une quelconque des autres revendications précédentes, **caractérisé en ce que** la seconde station appartient à une classe de stations qui attendent en permanence des signaux sur la ligne physique et transmettent des signaux sans fil en réponse à ceux-ci.

7. Procédé selon la revendication 1 ou l'une quelconque des autres revendications précédentes, **caractérisé en ce que** la seconde station crée le réseau sans fil avec la première station en utilisant les paramètres de réseau de l'une des deux stations, en particulier les paramètres de réseau de la première station.

8. Procédé selon la revendication 1 ou l'une quelconque des autres revendications précédentes, **caractérisé en ce que** des données peuvent être transmises entre stations sous forme cryptée après l'établissement du réseau sans fil, et **en ce qu'**une clé de réseau nécessaire à cet effet est spécifiée par l'une des stations et transmise à l'autre station par l'intermédiaire de la ligne physique ou sans fil, en particulier par balise.

9. Procédé selon la revendication 1 ou l'une quelconque des autres revendications précédentes, **caractérisé en ce que** la première station est associée à un véhicule tracteur et **en ce que** la seconde station est associée à une remorque.

10. Procédé selon la revendication 1 ou l'une quelconque des autres revendications précédentes, **caractérisé en ce qu'**une conduite d'air comprimé et/ou une ligne électrique est/sont prévue(s) en tant que lignes physiques.

11. Procédé selon la revendication 1 ou l'une quelconque des autres revendications précédentes, **caractérisé en ce que** le réseau sans fil est un réseau local sans fil, WLAN, en particulier selon la norme IEEE 802.11.

12. Procédé selon la revendication 11, **caractérisé en ce que** les signaux transmis par la première station et/ou par la seconde station pour établir le réseau sont contenus dans des balises.

13. Procédé selon la revendication 12, **caractérisé en ce que** les balises de la première station contiennent au moins l'une des informations suivantes en plus des informations habituelles pour le WLAN :
- la première station est à la recherche d'un partenaire réseau,
- le type d'un dispositif associé à la station,
- un identificateur de station unique qui ne doit pas nécessairement correspondre à l'identificateur d'ensemble de services, SSID.

14. Procédé selon la revendication 12 ou 13, **caractérisé en ce que** les balises de la seconde station contiennent au moins l'une des informations suivantes en plus des informations habituelles pour le WLAN :
- des signaux indiquant une intention de se connecter sans fil à une autre station,
- le type d'un dispositif associé à la station,
- un identificateur de station unique qui ne doit pas nécessairement correspondre au SSID,
- des signaux qui dépendent des signaux transmis par la première station sur la ligne physique.

15. Procédé selon la revendication 11 ou l'une quelconque des autres revendications précédentes, **caractérisé en ce que** les deux stations communiquent entre elles par l'intermédiaire d'un système de distribution sans fil, WDS, après l'établissement du réseau.

16. Réseau sans fil pour véhicule destiné à mettre en oeuvre le procédé selon l'une quelconque des autres revendications précédentes, comprenant au moins deux stations (34, 37) qui sont également reliées entre elles par l'intermédiaire d'une ligne physique, dans lequel au moins une première station (34) comporte également des moyens destinés à transmettre des signaux par l'intermédiaire de la ligne physique et au moins une seconde station (37) comporte également des moyens destinés à recevoir les signaux transmis par l'intermédiaire de la ligne physique, dans lequel les moyens destinés à transmettre les signaux peuvent être commandés en fonction des signaux précédemment transmis sans fil entre les stations.

17. Réseau pour véhicule selon la revendication 16, **caractérisé en ce que** les moyens destinés à transmettre les signaux par l'intermédiaire de la ligne physique comprennent un transducteur de pression, en particulier un modulateur de pression, et **en ce que** la ligne physique est de préférence une ligne pneumatique, en particulier une ligne de pression de commande d'un système de freinage pneumatique.

18. Réseau pour véhicule selon la revendication 16, **caractérisé en ce que** les moyens destinés à transmettre les signaux par l'intermédiaire de la ligne physique comprennent un transducteur de tension, en particulier un modulateur de tension, et **en ce que** la ligne physique est de préférence une ligne électrique, en particulier une ligne de feu stop.

19. Unité de commande (32, 35) destinée à mettre en oeuvre le procédé selon l'une quelconque des autres revendications 1 à 15.
